# EUROPEAN PATENT APPLICATION

(11) **EP 2 961 140 A1**
(43) Date of publication of application: **30.12.2015**
(21) Application number: 15001777.0
(22) Date of filing: 16.06.2015
(51) Int. Cl.: H04M 1/60, H04B 1/403, H04M 1/03

(54) **NOVEL APPROACH FOR ENABLING MIXED MODE BEHAVIOR USING MICROPHONE PLACEMENT ON RADIO TERMINAL HARDWARE**

(30) Priority: 26.06.2014 US 201414315400
(71) Applicant: HARRIS CORPORATION, Melbourne, FL 32919 (US)
(72) Inventor: Tennant, Bryce, Rochester, NY 14625 (US); Warsaw, Thomas, West Henrietta, NY 14586 (US)
(74) Representative: Schmidt, Steffen J.

(57) **Abstract**

Method for operating a portable communication device (PCD) (100) such as a land mobile radio (LMR) involves, when operating the PCD in a half-duplex mode, a first speaker (330) adjacent a first end of the PCD being selectively used to reproduce received audio. In this mode, a first microphone (324a) is used to acquire a transmitted audio input for the PCD, and a second microphone (325) is used to acquire audio information for a first noise cancellation process. Conversely, when operating the PCD in a full-duplex mode of communicating, the function of the first and second microphones are reversed so that the second microphone is used to acquire a transmitted audio input for the PCD, and the first microphone is used for a second noise cancellation process.

## Description

### BACKGROUND OF THE INVENTION

### Statement of the Technical Field

The inventive arrangements relate to portable electronic communications devices, which are capable of operating in multiple communications modes, and more particularly to land mobile radios which have more than one operating mode.

### Description of the Related Art

Some types of portable electronic communications devices transmit and receive radio-frequency (RF) energy in a communication mode known as "half duplex." In the half-duplex communications mode, signal transmission can occur in two directions, i.e., to and from each user. The signal transmission, however, can occur in only one direction at a time. To facilitate transmission in a particular direction, the user of the transmitting device typically actuates a button or key on his or her communications device. The button or key, when actuated, generates an input that is interpreted by the communications device as a transmit command. This mode of operation is commonly referred to as push-to-talk or PTT.

PTT is a form of half-duplex communication that is frequently used in land mobile radio (LMR) devices. LMR devices are a class of radio equipment designed for use by mobile government and commercial users to communicate, usually on land. For example, LMR devices are commonly used by emergency responders such as firefighters and paramedics; construction crews; security guards; etc.

Portable electronic communications devices, such as PDAs, cellular phones, and smart phones, i.e., cellular phones with enhanced computing functionality and connectivity capabilities, are in widespread use. These devices commonly transmit and receive RF energy in a communication mode known as "full duplex." In the full-duplex communication mode, signal transmission also occurs in two directions, i.e., to and from each user. The signal transmission in full-duplex mode can occur in both directions in a way that is concurrent or at least appears to the user to be concurrent. In full-duplex mode a user typically utilizes a handset with a low powered headset speaker that is placed adjacent to the user's ear. A separate microphone is usually provided at a location on the device opposed from the location of the headset speaker. This arrangement facilitates detection of voice audio and minimizes the potential for feedback from the headset speaker.

Various communication protocols are commonly used for LMR devices. For example, these can be trunked or conventional systems. Exemplary systems include P25, Enhanced Digital Access Communications System ("EDACS"), OPENSKY.RTM. or Terrestrial Trunked Mobile Radio ("TETRA"). LTE is an acronym for Long Term Evolution and represents a standard for wireless communication of high-speed data for wireless terminals. As is known in the art, the LTE technology is based on the GSM/EDGE and UMTS/HSPA network technologies. In general, LTE is intended to increase the capacity and speed of wireless data networks by using a unique radio interface in conjunction with improvements in network infrastructure. LTE is an emerging technology for public safety and has not been widely adopted at this point for LMR applications.

### SUMMARY OF THE INVENTION

Embodiments of the invention concern a method for operating a portable communication device (PCD) such as a land mobile radio (LMR). According to one aspect of the invention, when operating the PCD in a half-duplex mode, a first speaker of the PCD is selectively used to reproduce received audio, a first microphone is used to acquire a transmitted audio input for the PCD, and a second microphone is used to acquire audio information for a first audio processing algorithm. Conversely, when operating the PCD in a full-duplex mode of communicating, the function of the first and second microphones are modified so that they are used for different purposes as compared to the way they are used in the half-duplex mode of communicating. For example, in the full-duplex mode, the second microphone can be used to acquire a transmitted audio input for the PCD, and the first microphone is used for a second audio processing algorithm. Notably, the first and second audio processing algorithms can be different from one another.

According to another aspect, the invention involves a method for operating an PCD in a half-duplex mode or a full-duplex mode. In the half-duplex mode, the method involves reproducing output audio by communicating a high band portion of the output audio signal to a first speaker adjacent a first end of the PCD and concurrently communicating a low band portion of the output audio signal to a second speaker. In this mode, the high band portion of the audio signal containing a higher range of audio frequencies as compared to the low band portion. In the half-duplex mode of communication, at least a first microphone is used to acquire a transmitted audio input for the PCD. A second microphone adjacent to a second end of the PCD opposed from the first end is used in the half-duplex mode to acquire audio signals for a first audio processing algorithm. For example, the first audio processing algorithm can be a noise cancellation process.

When operating in a full-duplex mode, the output audio of the PCD is reproduced by communicating a full bandwidth audio signal exclusively to the first speaker. Notably, the full bandwidth audio signal is comprised of audio frequencies included in both the high band and the low band. The method further involves automatically selectively controlling the function of the first and second microphone in the full duplex mode, so that the second microphone is used to acquire a transmitted audio input for the PCD, and the first microphone is used for a second audio processing algorithm which can be different as compared to the first audio processing algorithm. For example, the second audio processing algorithm can be an echo cancellation process.

### BRIEF DESCRIPTION OF THE DRAWINGS

Embodiments will be described with reference to the following drawing figures, in which like numerals represent like items throughout the figures, and in which:
FIG. 1 is a front panel view of a personal communication device that is useful for understanding the invention.
FIG. 2 is a rear or back panel view of the personal communication device in FIG. 1.
FIG. 3 is a block diagram that is useful for understanding an architecture of the portable communication device in FIG. 1.
FIG. 4 is a flowchart that is useful for understanding a method for controlling operations of the PCD in FIGS. 1-3 in both a full-duplex mode and an half-duplex mode.

### DETAILED DESCRIPTION

The invention is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operation are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

A portable communication device (PCD) such as a land mobile radio (LMR) can operate in multiple modes of communication. For example an LMR (which traditionally operated only in a half-duplex mode) can potentially have full duplex voice capability with the integration of wireless cellular communications technologies, such as LTE. But conventional LMR devices are optimized for half-duplex communications and close positioning of speaker and microphone will often prohibit full duplex voice capability. One solution to this problem could involve operating the LMR in a speaker-phone like mode, rather than in a true full duplex mode. But this approach is not entirely satisfactory since it does not provide true full duplex communications. True full duplex is a mode in which communications between two devices can truly occur in both directions simultaneously. In contrast, conventional hands-free speakerphone typically must disable a telephone speaker when the phone's microphone is activated so as to avoid detecting and re-transmitting a received voice transmission from a caller. Failure to disable the microphone in this way will cause an echo effect (or feedback) for a party on the other device. Because the telephone speaker of a local telephony device is temporarily disabled in this way, a user generally cannot hear what a remote caller is saying when the microphone on the local telephony device is activated.

Notably, the problem of implementing full duplex communication is not generally encountered in conventional cellular telephone devices. This is due to the fact that the cellular telephony device is normally held to the user's ear during full-duplex conversation, the speaker and microphone are spaced relatively far apart, and the audio output of the device tends to be quite low. But this is contrary to the way in which LMRs are used today. An LMR is conventionally arranged to facilitate half-duplex communication rather than full duplex communication. So a problem arises if an LMR device is needed to provide optimal performance in both half-duplex and full-duplex operation.

According to one aspect, the invention concerns a method for operating a portable PCD, such as an LMR. When operating the PCD in a half-duplex mode of communicating, a first speaker adjacent a first end of the PCD is selectively utilized to reproduce received audio, at least a first microphone is used to acquire a transmitted audio input for the PCD, and a second microphone is used to acquire audio information for a first audio processing algorithm. For example, the first audio processing algorithm can be a noise cancellation process. But when operating the PCD in a full-duplex mode of communicating, the function of the first and second microphone are automatically selectively modified so that the microphones are each used for a different function. For example, the second microphone can be used to acquire a transmitted audio input for the PCD and the first microphone is used for a second audio processing algorithm. Notably, the second audio processing algorithm can be different as compared to the first audio processing algorithm. For example, the second audio processing algorithm can be a different noise cancellation process or an echo cancellation process. The first microphone can be advantageously selected so that it is adjacent to the first speaker at the first end of the PCD, and a position of the second microphone is selected so that it is adjacent to a second end of the PCD opposed from the first end. A third microphone can be provided adjacent to the first speaker or at the first end to perform the same functions as the first microphone in both of the full duplex mode of communication and the half duplex modes of communication. Each of the first, second and third microphones are disposed in a housing or chassis of the PCD.

According to one aspect of the invention, the first speaker and a second speaker are used to reproduce the received audio exclusively when operating the PCD in the half-duplex mode of communicating. In the half-duplex mode, the first speaker is used for reproducing a first frequency range portion of the received audio and the second speaker is used to reproduce a second frequency range portion of the received audio. The first frequency range in such a scenario is advantageously chosen so that it is higher than the second frequency range. Moreover, the second speaker is advantageously selected to have a second low frequency cutoff which is lower as compared first low frequency cutoff of the first speaker. The first speaker can also have a lower power rating than the second speaker. Accordingly, a power level of an audio signal applied to the first speaker in the full-duplex mode is advantageously controlled so that it is less than a maximum power which can be applied to the second speaker in the half duplex mode.

According to another aspect, the method involves in a half-duplex mode, reproducing output audio from the PCD by communicating a low band portion of the output audio signal to a first speaker and concurrently communicating a high band portion of the output audio signal to a second speaker. The high band portion of the output audio is selected so that it contains higher range of audio frequencies as compared to the low band. A location for the first speaker is selected so that it is adjacent a first end of the PCD. The first speaker is advantageously arranged to communicate its audible output through a first speaker grill located at the front or top side of the PCD. Stated differently, a first speaker acoustic aperture (speaker grill) formed in the chassis or housing of the PCD is acoustically coupled to the first speaker, and is located on the front panel of the PCD. The second speaker is arranged to communicate its audible output through a second speaker grill located at the back of the PCD (i.e. on a side of the PCD opposed from the first speaker grill). In other words, a position of a second speaker acoustic aperture (speaker grill) formed in the chassis of the PCD is acoustically coupled to the second speaker, and is located on a rear panel of the PCD, opposed from the front panel.

In the full-duplex mode for the PCD, output audio is reproduced by communicating a full bandwidth audio signal to the first speaker. In a preferred embodiment, the full bandwidth audio signal is communicated exclusively to the first speaker, and the second speaker is not active. The full bandwidth audio signal includes audio frequencies of the high band and the low band. For example, the full bandwidth audio signal can include all of the audio frequencies of the high band and the low band.

Notably, in the half-duplex mode of communication, at least a first microphone is automatically selected for purposes of transducing a transmitted audio input for the PCD. This first microphone is preferably positioned on the front side of the PCD at the first end, e.g. adjacent to the first speaker. A first microphone acoustic aperture is acoustically coupled to the first microphone, and is positioned on a front panel of the PCD. In this half-duplex mode, a second microphone adjacent to a second end of the PCD (opposed from the first end), is advantageously used to acquire input audio content for use in an audio processing algorithm (e.g.,a noise cancellation process). For example, a second microphone acoustic aperture can be acoustically coupled to the second microphone, and can be positioned on the front panel of the PCD. The noise cancellation process is designed to reduce the amount of ambient acoustic noise in a noisy environment that is included in a transmitted audio signal. The function of the first and second microphone is automatically reversed in the full duplex mode so that the second microphone is used to acquire a transmitted audio input for the PCD and the first microphone is used for an audio processing algorithm. The second audio processing algorithm can be different from the first audio processing algorithm. Alternatively, the second audio processing algorithm can be an audio echo cancellation process.

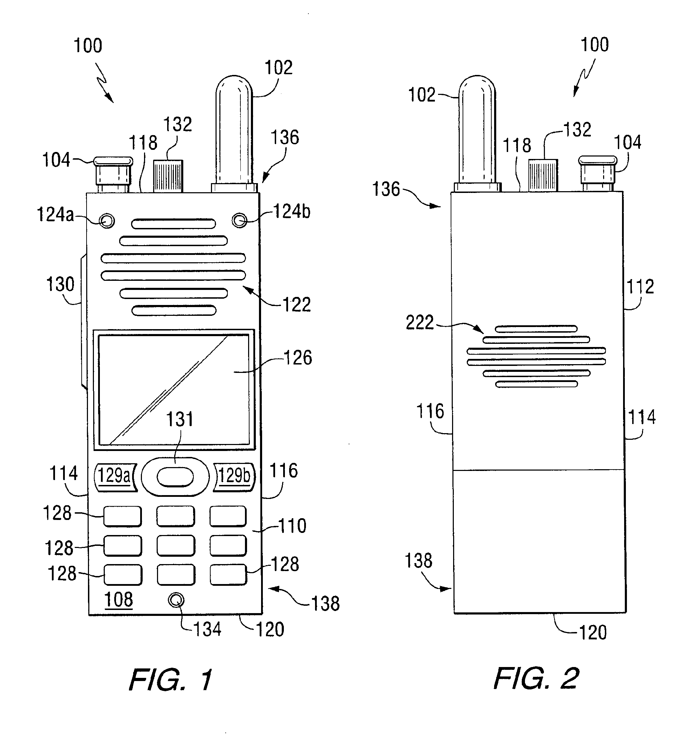

Referring now to FIGs. 1 and 2, there is provided a front and a back view, respectively, of an exemplary portable communication device 100 that is useful for understanding the present invention. Although the portable communication device (PCD) 100 is shown in FIGS. 1 and 2 to be a portable land mobile (LMR) radio, the invention is not limited in this regard. For example, the portable communication device 100 can be a mobile telephone, a cellular telephone, a personal computer, a PDA, or any other portable electronic device capable of communicating with other remotely located communication devices. PCD has a common configuration for a portable communication device which includes a housing 108 which is generally in the form of a rectangular prism. For example, many LMR devices have this basic configuration which includes several major surfaces. The surfaces generally include opposing front and back panels 110, 112, opposing top and bottom panels 118, 120, and opposing first and second side panels 114, 116 which extend between the front and back panels. The front and back panels are generally the largest of the major panels comprising the housing of the portable communication device. Conversely, the top and bottom panels are usually the smallest of the major surfaces. Still, the invention is not limited to the configuration shown in the figures, and other configurations are possible for purposes of the present invention.

The front panel 110 is arranged to facilitate convenient and effective operation of the portable communication device when the back panel 112 rests within the palm of a user's hand. As such, the front panel includes a speaker grill 122 to facilitate communication of output audio to a user from a first speaker (not shown in FIG. 1) which is disposed within the housing subjacent to the grill. The speaker grill (which is sometimes referred to herein as an acoustic aperture) can comprise a portion of the housing 108 which has perforations, slots or other types of openings formed therein to facilitate the transmission of sound from inside the housing to the external environment. The speaker grill is located at or adjacent to a first end 136 of the portable communication device to facilitate listening to communications received by the portable communication device. In the position shown in FIG. 1, it can be said that the first speaker and the speaker grill are located on the front panel of the PCD, on an upper portion of the device. The upper portion of the device can generally be understood to include at least the upper half of the device, but can comprise lesser portions (e.g. the ¼ of the device extending from the first end 136 toward the center of the device).

At least one microphone port 124a resides at an upper portion of the front panel 110 adjacent to the speaker grill. A second microphone port 134 is provided at a bottom portion of the front panel. For example, the second microphone port 134 can be disposed at a second end 138 adjacent to the bottom panel 120. A third microphone port 124b can also be provided at the front panel 110 adjacent to the speaker grille. The third microphone port is advantageously located at an upper portion of the front panel, adjacent the first end. Each microphone port comprises an acoustic aperture defined in the chassis of the PCD and is designed to couple acoustic signals to a respective microphone from the acoustic environment outside the chassis or housing of the PCD. Separate microphones (not shown in FIGs. 1-2) are provided for each of the microphone ports, each microphone being acoustically coupled to a respective microphone port for receiving input audio from a user (i.e. speech audio).

The front panel can also include an electronic display unit 126. The electronic display unit can be any suitable type of electronic display which is capable of presenting alpha-numeric and graphical data to a user. As such, the electronic display unit can facilitate the presentation of information to a user concerning the operational status of the portable communication device. The position of the display unit on the front panel is advantageous because the front panel is generally unobstructed and within the user's line of sight when the back panel of the unit rests within the palm of a user's hand. In a portable communication device, one or more data input keys 128 can also be provided on the front panel to facilitate input of data. The data input keys can include alpha-numeric markings to facilitate data input. Control keys 129a, 129b and 131 facilitate control of various PCD functions. A push-to-talk (PTT) button 130 is provided (e.g. on a side panel 114 of the device).

The top panel 118 of the portable communication device extends from an upper peripheral edge of the front panel to an upper peripheral edge of the back panel. The top panel also extends between an upper peripheral edge of the first and second side panels 114, 116. As such, the top panel is generally transverse to the front, back and side panels. In some embodiments of the invention, one or more controls can be optionally provided on the top panel 118. For example, rotary control knobs 104, 132 or button controls can be provided on the top panel for access and manipulation by a user.

The portable communication device 100 includes one or more antennas. At least one of the antennas can be optionally provided external of the housing 108. For example, the portable communication device can include an antenna 102. The antenna 102 includes, but is not limited to, a Radio Frequency ("RF") antenna that may be used for any communication purpose, such as for voice and data communications. One or more additional antennas (not shown) can also be provided within the housing 108.

The housing 108 is configured to house various internal components, including a battery which serves as a primary source of power for the portable communication device. The internal components also include, but are not limited to, internal circuitry for communicating signals to and from remotely located devices via the antenna 102 and/or an antenna which is disposed within the housing. More particularly, the internal components can comprise a receiver and/ a transmitter, which may in combination be configured as a transceiver for effecting half-duplex communications. In this regard, the internal circuitry can be electrically connected to the antenna 102 or to an internal antenna (not shown). Additionally or alternatively, the one or more internal circuits (e.g. receiver circuits, transmitter circuits and/or transceiver circuits) can be arranged to provide full duplex communications. Other components of the portable communication device (e.g., electronic display unit 126, data input keys 128, control keys 129a, 129b, and 131 of the portable communication device 100 may be connected to the same or different circuitry contained in the portable communication device. For example, one or more of such components can be electrically connected to circuits for controlling a microprocessor contained within the portable communication device 100.

The portable communication device 100 can optionally include a second speaker (not shown in FIGs. 1 and 2). The second speaker reproduces audio signals associated with certain communication modes as hereinafter described. In FIG. 2, a second speaker grill 222 is shown on the back panel 112 of the portable communication device. The second speaker grill is an acoustic aperture formed in the chassis or housing of the PCD. As such, the speaker grill comprises one or more perforations, slots or other openings formed in the housing to facilitate dispersal of audio reproduced by the second speaker. The invention is not limited with regard to the particular placement of the second speaker on the back panel and, in some instances; the second speaker can be located at or adjacent to the bottom panel 120. In such a scenario, the speaker grill can also be positioned at or adjacent to the bottom panel. According to one aspect of the invention, the second speaker is designed to withstand a higher maximum audio power input as compared to the first speaker.

The second speaker can also be selected to have an improved ability to reproduce a lower range of audio frequencies as compared to the first speaker. In this regard, the second speaker can be understood to be a woofer type speaker, whereas the first speaker is a tweeter type of speaker. Notably, lower audio frequencies are less directional in their propagation characteristics as compared to higher frequencies. Accordingly, the placement of the grill 222 on a back side of the PCD does not significantly diminish the ability of a user to hear lower frequency audio reproduced by a speaker associated with such grill. In contrast, it is advantageous that higher frequency audio signals, which are important for clarity and intelligibility of speech, be reproduced from the first speaker disposed behind first grill 122.

The PCD 100 is advantageously configured to facilitate two or more operating modes, and at least some of these modes may operate concurrently. In one operating mode, the PCD 100 operates as a land mobile radio (LMR) that communicates with other LMR devices using an RF interface. The PCD 100 can be configured to communicate in an analog or digital mode with Project 25 (P25) radios. The phrase "Project 25 (P25)", as used herein, refers to a set of system standards produced by the Association of Public Safety Communications Officials International (APCO), the National Association of State Telecommunications Directors (NASTD), selected Federal Agencies and the National Communications System (NCS). The P25 set of system standards generally defines digital radio communication system architectures capable of serving the needs of Public Safety and Government organizations. The PCD 100 can also be configured to communicate in analog mode with non-P25 radios using an RF interfaces.

The PCD 100 can be used in a "talk around" mode. "Talk around" mode allows communications between two LMR devices without any intervening equipment, e.g., a repeater, between the two devices. The PCD 100 can also be used in a conventional mode where two or more LMR devices communicate through the repeater (not shown) without trunking. The PCD 100 can further be used in a trunked mode where traffic is automatically assigned to one or more voice channels by the repeater. The PCD 100 can be configured to operate in a single frequency band, or alternatively may operate in a plurality of frequency bands. For example, an RF interface provided in the PCD 100 can be configured to support analog Frequency Modulation (FM) communications and P25 modulation (digital C4FM) communications in the following bands: 30-50 MHz Very High Frequency (VHF) LOw (LO) band; 136-174 MHz VHF High (Hi) band; 380-520 MHz Ultra High Frequency (UHF) band; and 762-870 MHz band. The PCD 100 can also be configured to operate in other frequency bands and with other modulation schemes.

The PCD 100 can also operate as a mobile telephony device. As such, the PCD 100 can communicate with other telephony devices using cellular base stations (not shown) which are provided as part of a cellular network. Mobile telephony operations are well known and therefore will not be described here in detail. However, it can be understood that PCD 10 can operate using any one of a plurality of well-known cellular communications standards which are now known or may be known in the future. For example, the PCD 100 can be configured to communicate using various digital cellular technologies including LTE, Global System for Mobile Communications (GSM), General Packet Radio Service (GPRS), cdmaOne, CDMA2000, Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/TDMA), and Integrated Digital Enhanced Network (iDEN).

The PCD can further include suitable facilities for communicating with the use of one or more wireless networks. These wireless networks can include wireless personal area networks (WPANs), wireless local area networks (WLAN), wireless mesh networks, and wireless wide area networks (WANs). In an exemplary embodiment, the PCD 100 communicates using the Bluetooth^{®} protocol, or by means of some other short range wireless technology such as the 802.xx family of wireless communications standards, including Wi-Fi and ZigBee^{®}. Alternatively, longer range wireless technologies such as may be used. The details of these technologies and the hardware required to implement transmitters and receivers that use these technologies are well known to persons skilled in the art, and thus, will not be described in great detail herein.

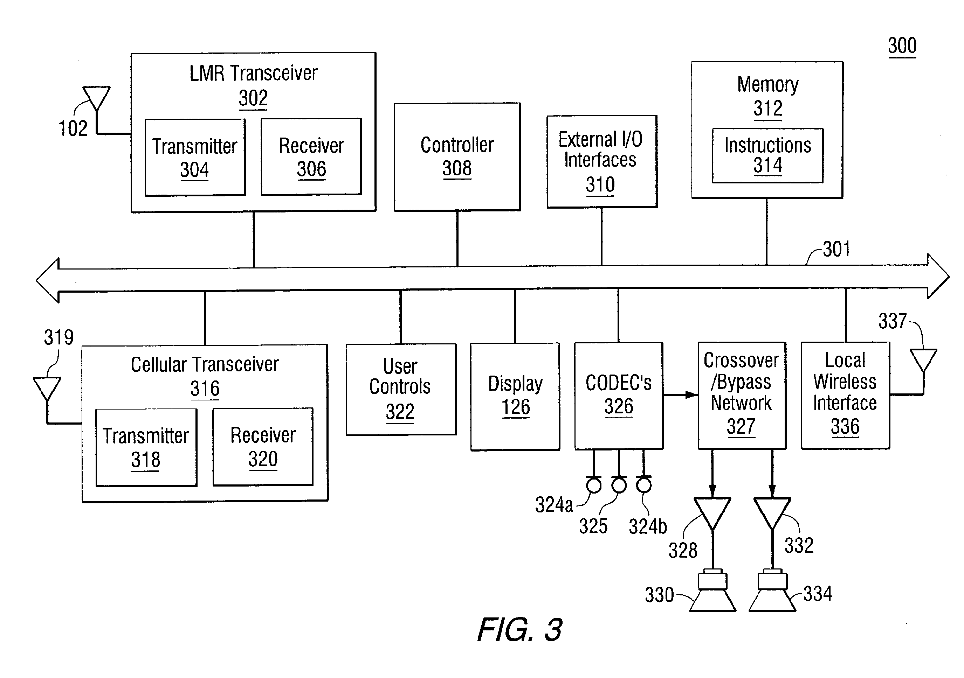

Referring now to FIG. 3, there is provided a more detailed block diagram 300 of PCD 100 in accordance with an embodiment of the present invention. The PCD 100 includes a controller 308. The controller 308 is comprised of at least one electronic processing device. For example, the controller 308 can include one or more microprocessors, microcontrollers, application-specific integrated circuits (ASICs) and programmable devices, such as a field programmable gate arrays (FPGAs) or complex programmable logic devices (CPLDs). The controller 308 may also have access to memory 312. The memory 312 may include volatile memory, such as static or dynamic RAM, and non-volatile memory, such as ferroelectric memory, magneto-resistive memory, flash memory, or a hard disk drive. The memory 312 may be used to store program instructions (e.g., software code) and other information required by the controller 308.

The controller 308 can communicate with memory 312 and one or more other component modules by means of at least one data communication bus 301. For example, the controller 308 can use bus 301 to communicate with one or more external I/O interfaces 310. Examples of external I/O interfaces include ports for USB, serial, Ethernet, and Firewire, among others. Such interfaces are well known to persons skilled in the art, and thus, will not be described in great detail herein. A user can interact with the controller 308 through the External I/O interfaces 310 to upgrade software code and to transfer information to and from the controller 308.

The memory 312 includes a computer-readable storage medium on which is stored one or more sets of instructions 314 (e.g., software code) configured to implement one or more of the methodologies, procedures, or functions described herein. The instructions 314 can also reside, completely or at least partially, within the controller 308. The controller 308 executes the program instructions to perform the functions assigned to the controller 308. Alternatively, the methods, procedures or functions described herein can be implemented using dedicated hardware implementations. Thus, the exemplary system is applicable to software, firmware, and hardware implementations.

The PCD 100 includes certain user controls which are represented collectively in FIG. 3 as user controls 322. The user controls include a plurality of buttons, switches and knobs that a user can use to interact with the controller 308. Accordingly, the user controls 322 can include PTT button 130 and rotary controls 104, 132 which can be used to control volume, channel or other radio functions. The user controls 322 can also include one or more soft keys (e.g. keys 129a, 129b) and/or hardware-based (e.g., keys 128). These keys can be used for any needed PCD function, such as selection of RF channel and/or frequency band on which communications are to be conducted. Additional soft keys can be presented on the electronic display unit 126) for purposes of implementing a DTMF keypad, a touch-screen keyboard, and so on.

The PCD includes an LMR transceiver 302 comprised of a transmitter 304, receiver 306 and an antenna 306. There are many different possible methods of implementing the LMR transceiver 302. Although FIG. 3 illustrates only a single antenna 102, separate transmit and receive antennas may be used for the LMR transceiver. Multiple transmit and/or receive antennas may also be used to provide for diversity transmission and reception and/or beam-forming. Each of the transmitter 304, receiver 306 and the antenna 305, are well known to persons skilled in the art. Thus, these components will not be described here in detail. However, a brief discussion of the LMR transceiver architecture is provided to assist a reader in understanding the present invention.

An exemplary transmitter 304 includes a modulator and a local oscillator (not illustrated). The function of the transmitter 304 is to modulate data onto an RF signal derived from the local oscillator and amplify the modulated signal for transmission. The data to be modulated is provided by the controller 308 to the transmitter 304. The RF signal produced by the transmitter 304, which carries the data, is amplified using an RF power amplifier (not shown) and is coupled to the antenna 305. The RF signal is thereby broadcast to a repeater or to another PCD based communication device.

An exemplary receiver 306 includes a demodulator and a second local oscillator (not illustrated). An RF signal is received from the antenna 305 and amplified by a low noise power amplifier (not shown). The amplified received RF signal is then demodulated by the receiver 306 using the second local oscillator. Data is thereby extracted from the input RF signal. The extracted data is provided to the controller 308.

The controller 308 sets the frequency of the local oscillators and the gain of the power amplifiers. The frequency of the local oscillators is typically defined by the channel that the PCD 100 is set to. If the PCD 100 transmits and receives data using the same frequency, the RF interface may include only a single local oscillator (not illustrated) that is shared by the transmitter 304 and the receiver 306.

The PCD 100 can be a multimode device which includes a cellular transceiver 316. The cellular transceiver 316 includes a transmitter 318, a receiver 320 and an antenna 319. The controller 308 uses communication bus 301 to communicate data and control signals to and from the cellular transceiver 316. The cellular transceiver 316 functions in a manner similar to the LMR transceiver 302. However, the air interface and other communications processes implemented in cellular transceiver 316 will be based on a digital cellular communications protocol. The digital cellular communication protocol can be any of a variety of well-known cellular communication protocols as outlined above. The cellular communication processes are implemented and controlled by controller 308 using instructions 314.

The local wireless interface 336 provides a wireless communications interface for communicating with a LAN or PAN type communication network using a local wireless link. In an exemplary embodiment, the local wireless interface 336 provides an interface that uses a WiFi^{®} or Bluetooth^{®} protocol as known in the art. An antenna 337 is provided to facilitate the wireless communications described herein using local wireless interface 336. Data and control signals are passed between the controller 308 and the local wireless interface 336 using communication bus 301. Instructions 314 can facilitate voice or data communications using local wireless interface 336. For example, local wireless interface 336 can be used to facilitate a voice over IP (VoIP) communication session as is known in the art.

PCD 100 is a multi-mode device that can facilitate voice and/or data communications using any one of LMR transceiver 302, cellular transceiver 316, or local wireless interface 336. Different types of communication sessions can involve different ways of utilizing the PCD 100. For example, an LMR communication session is typically a half-duplex type session in which bidirectional communication can occur as between two communication devices, but the wherein the parties to such communication alternately take turns transmitting and receiving. As such LMR communications are usually implemented using a PTT type arrangement in which a user presses a PTT button when it is desired to transmit a voice communications. The user releases the PTT button to listen to received voice communications. During LMR communication sessions and PTT type communications comprising a half-duplex operating mode, audio is reproduced so that received audio can be heard while the device is held some distance away from the user's ear. The PCD must be capable of relatively high levels of audio output so that the received audio can be overheard even in a noisy environment. In some embodiments, the first and second speakers as described above are used concurrently for reproducing audio in the half-duplex mode of communicating. The first speaker is designed for relatively lower power, higher frequency audio inputs whereas the second speaker is designed to accommodate relatively higher power audio inputs, including lower frequency components. Accordingly, perceived loudness is achieved with the rear-facing second speaker reproducing a relatively low frequency band of audio signals. Higher frequency audio signals which are important for understanding clarity and content are reproduced using the first speaker which directs its audio output through the front panel of the PCD.

Mobile telephony sessions are frequently conducted with the mobile handset placed directly on or adjacent to the user's ear. In such a scenario, much lower sound levels are usually sufficient for purposes of allowing the user to hear received audio. Accordingly, a small, low power handset speaker (i.e. the first speaker) can be used during mobile telephony sessions to reproduce received audio signals. The audio bandwidth of signals presented during such a telephony session can include a full bandwidth audio signal, including all frequency components which are available. The second speaker can be inactive during a telephony session as described herein while the first speaker is presented with the full bandwidth audio signal. Conversely, during a PTT type communication session, a cross-over network can be used to separate and route the full range audio to be reproduced into two separate frequency bands (e.g., high frequency range, and low frequency range). The high frequency range can be communicated to the first speaker and the low frequency range can be communicated to the second speaker in such PTT mode. These and other details of the inventive arrangements are discussed below in further detail.

From the foregoing it will be appreciated that a PCD 100 as described herein can include two separate transducers or speakers for converting electrical signals into sound. The PCD 100 will include a first speaker 330 (which is sometimes referred to herein as a handset speaker) and a second speaker 334 (which is sometimes referred to herein as a loudspeaker). Both of the speakers are disposed within the chassis 108 as described above in relation to FIG. 1. More particularly, the first speaker is arranged subjacent to first speaker grill 122 and the second speaker is arranged subjacent to second speaker grill 222.

Driver circuitry 328 is used to provide audio drive signals for first speaker 330 and driver circuitry 332 is used to provide audio drive signals for second speaker 334. The driver circuitry 328 and first speaker 330 are optimized for the kinds of lower volume audio signals typically required during telephony sessions when the handset is placed directly on or adjacent to the user's ear. The driver circuitry 332 and second speaker 334 are optimized for the much larger amplitude audio signals that are commonly required during LMR or PTT communication sessions. Accordingly, the second speaker 334 is sometimes referred to herein as having a "high power audio capability" in order to differentiate it from the first speaker 330, which is only designed for reproduction of lower amplitude audio signals. Further, second speaker 334 can have an improved capability of producing lower frequency audio signals as compared to the first speaker 330. As such, the first speaker can have a low frequency cutoff that is somewhat higher as compared to the low frequency cutoff of the second speaker. Notably, the first speaker in PTT (half duplex) mode is intended to reproduce only the high frequency components and the second speaker is intended to reproduce the low frequency components. In the full duplex mode a bandwidth of the audio signal presented to the first speaker can be made broader or wider (at low power) to support on-ear reception of audio signals by the user.

Analog audio signals from first microphones 324a, second microphone 325, and third microphone 324b are separately provided to individual audio CODECs 326 where the analog audio signals are separately encoded in a digital format. Audio CODEC devices are well known in the art and therefore will not be described here in detail. However, it will be appreciated that CODECs 326 can encode the analog audio signals using any encoding protocol that is suitable for a particular type of communication session. For example, each individual CODEC can separately encode received analog audio from microphone 324a, 324b, and 325 using the Improved Multiband Excitation (IMBE) vocoder system as defined by P25 standards. Alternatively, other voice coding methods such as Advanced Multiband Excitation (AMBE) or the Adaptive Multi-rate codec can be used for this purpose as may be appropriate for other types of communication sessions. The encoded audio signals are respectively provided from CODECs 326 to controller 308 where they can be used for purposes as described herein. At least some of the encoded audio signals can be formatted and arranged for transmission using LMR transceiver 302, cellular transceiver 316, or local wireless interface 336. Others can be used for noise cancellation processes. At least one of the CODECs can also function to convert encoded audio data from controller 308 to analog audio signals which are suitable for use as input signals for driver circuits 328, 332. The controller 308 can receive such encoded audio data from any one of the LMR transceiver 302, cellular transceiver 316 or local wireless interface 336 according to a particular communication session.

A cross-over/bypass network 327 can be provided to selectively control a range of audio frequencies that are communicated to driver circuits 328, 332. For example, in a half-duplex mode of operation, the cross-over/bypass network can provide a relatively high frequency range of audio signals (e.g. 1500 Hz - 3.8 kHz) to driver circuit 328 for reproduction by first speaker 330, and a relatively low frequency range of audio signals (200 Hz to 1500 Hz) to driver 332 for reproduction by second speaker 334. Of course, the invention is not limited to a particular high frequency and low frequency range. Instead it should be understood that when operating in half-duplex mode, relatively low frequency voice components are to be directed to the rear facing second speaker and relatively high frequency voice components are to be directed to the front facing first speaker. It is also anticipated that the input audio signals applied to the rear facing second speaker will be of higher power levels as compared to those applied to the front facing first speaker. The use of two speakers as described herein can have certain advantages in a PCD which is capable of PTT and full duplex telephony operation. However, it should be understood that the inventive arrangements are not limited to PCD having two speakers. Instead, the inventive arrangements described herein should be understood to also include a PCD that has only one speaker.

When operating in a full-duplex mode, full range audio including frequencies comprising the low frequency range and high frequency range are communicated to the first driver circuit 328 for reproduction by first speaker 330. For example, in an exemplary embodiment, a full-range audio signal can comprise a frequency range of about 200 Hz to 3.8 kHz. The rear-facing second speaker is not used in the full-duplex mode. When operating in the full duplex mode, the signal levels provided to the first speaker 330 will naturally be reduced as compared to when operating in the half-duplex mode so as to avoid excessive volume levels when the PCD is held to the user's ear. Notably, the power level of the full range audio signal communicated to the first speaker 330 will be substantially less than the power level of signals communicated to the second speaker 334. Also, it is expected that at least some of the low frequency audio components may be attenuated at the output of the first speaker since it may not be capable of efficiently reproducing such lower frequency audio.

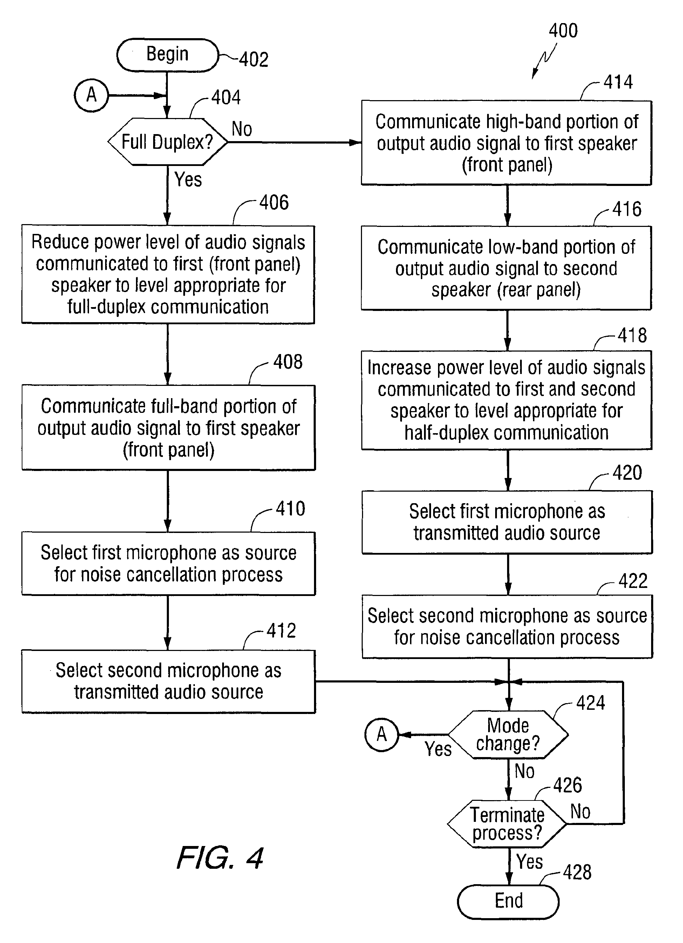

Referring now to FIG. 4, there is shown a flowchart 400 which is useful for understanding the present invention. The process begins at 402 and continues to step 40 where a determination is made as to whether a PCD is to operate in a full-duplex mode. If so (404: Yes), then the process continues on to step 406 where the PCD causes a reduced power level of audio signals to be communicated to the first speaker 330 (i.e., the front panel speaker). The power level is reduced to a level that is appropriate for full-duplex communication. The process continues on to step 408 where the CODEC and the cross-over/bypass network is controlled so that a full-band portion of the output audio signal is communicated to the first speaker 330. Notably, cross-over networks can be implemented in hardware (after the CODEC) or in software as part of a digital signal processing device. In step 410 the first microphone 324a is selected for use as an audio signal source for an audio processing algorithm, such as a noise cancellation process. In step 412 the second microphone 325 is selected for use as the source for audio (e.g. speech audio) which is to be transmitted by the PCD.

In step 424, a determination is made as to whether a mode change has occurred. If so, then the process returns to 404 where a determination is made once again as to whether a full-duplex mode has been selected. If so, then the process continues to step 414 in which the PCD selects a high-band portion of the output audio signal to be communicated to the first speaker (330). At 416 a low-band portion of the output audio is selected for communication to the second speaker 334. At 418 a power level of the audio signals communicated to the first and second speakers is increased to a level that is appropriate for half-duplex mode communications. At 420, 425 the function of the first and second microphones is modified. For example, in the embodiment shown, the first microphone 324a is selected as the source for transmitted audio and the second microphone is selected as the source for an audio processing algorithm. The audio processing algorithm in this mode can be a noise cancellation process or can involve a different type algorithm, such as an echo cancellation. The process continues on to 424 where a determination is made as to whether a mode change has occurred. If not (424: No) then the process continues on to 426 and a determination is made as to whether the process should be terminated. If so (426: Yes) then the process terminates at 428. Otherwise the process continues to monitor for the occurrence of a mode change at 424.

Since noise cancellation algorithms and echo cancellation algorithms using two or more microphones are well known in the art, such algorithms will not be described here in detail. However, it should be appreciated that, for purposes of the present invention, a different algorithm can be used for a full-duplex communication mode as compared to a half-duplex communication mode. Many different types of audio processing algorithms are known for use with a PCD having two or more microphones. The invention is therefore not limited to any particular algorithm for noise or echo cancellation. Rather, any suitable algorithm can be used for either mode.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

## Claims

1. A method for operating a portable communication device (PCD), comprising
when operating the PCD in a half-duplex mode of communicating,
selectively using a first speaker to reproduce received audio,
selectively using at least a first microphone to acquire a transmitted audio input for the PCD, and
selectively using a second microphone, to acquire audio information for a first audio processing algorithm selected from the group consisting of a noise cancellation process and an echo cancellation process; and
when operating the PCD in a full-duplex mode of communicating, automatically selectively modifying the function of the first and second microphone so that the first and second microphones are each used for a function different as compared to operations in the half-duplex mode of communicating.

2. The method according to claim 1, wherein in full-duplex mode the second microphone is used to acquire a transmitted audio input for the PCD, and the first microphone is used for a second audio processing algorithm.

3. The method according to claim 2, further comprising selecting at least one aspect of the first audio processing algorithm to be different as compared to the second audio processing algorithm.

4. The method according to claim 2, further comprising using a third microphone adjacent to the first speaker to perform the same functions as the first microphone respectively in both of the full duplex mode of communication and the half duplex modes of communication.

5. The method according to claim 1, further comprising using at least the first and second microphones coherently for beam-forming operations in at least one of the half-duplex or full duplex operating modes.

6. The method according to claim 1, further comprising using said first speaker and a second speaker to reproduce said received audio when operating the PCD in the half-duplex mode of communicating, and
when in said half-duplex mode, reproducing with the first speaker a first frequency range portion of the received audio and reproducing with the second speaker a second frequency range portion of the received audio, the first frequency range containing higher frequencies than the second frequency range.

7. The method according to claim 6, further comprising communicating a full range audio signal to the first speaker when operating said PCD in said full duplex mode of communicating, said full range audio signal having a third frequency range which includes frequencies of said first and second frequency range portions.

8. The method according to claim 7, further comprising:
selecting a position of a first microphone acoustic aperture in a chassis of the PCD which is acoustically coupled to the first microphone, to be on a front panel of the PCD, and
selecting a position of a first speaker acoustic aperture in the chassis of the PCD which is acoustically coupled to the first speaker, to be on the front panel of the PCD.

9. The method according to claim 8, further comprising selecting a position of the second speaker acoustic aperture formed in the chassis of the PCD which is acoustically coupled to the second speaker, to be on a rear panel of the PCD, opposed from the front panel.

10. The method according to claim 7, further comprising using said first speaker exclusively to reproduce said received audio when operating said PCD in said full duplex mode.
